# EUROPEAN PATENT APPLICATION

(11) **EP 3 547 430 A1**
(43) Date of publication of application: **02.10.2019**
(21) Application number: 19725833.8
(22) Date of filing: 30.01.2019
(51) Int. Cl.: H01M 8/1004, H01M 4/86, H01M 4/96, H01M 8/10, H01M 8/1018

(54) **MEMBRANE ELECTRODE ASSEMBLY FOR SOLID POLYMER FUEL CELL, AND SOLID POLYMER FUEL CELL**

(30) Priority: 31.01.2018 JP 2018014693; 29.03.2018 JP 2018065720; 04.12.2018 JP 2018227448
(71) Applicant: Toppan Printing Co., Ltd., Taito-ku, Tokyo 110-0016 (JP)
(72) Inventor: The designation of the inventor has not yet been filed
(74) Representative: Hoffmann Eitle
(86) International application number: PCT/JP2019/003130
(87) International publication number: WO 2019/151310

(57) **Abstract**

A membrane electrode assembly for a solid polymer fuel cell and a solid polymer fuel cell that have excellent adhesion at an interface between an electrode catalyst layer and a polymer electrolyte membrane are provided. The membrane electrode assembly for a solid polymer fuel cell according to the present embodiment includes electrode catalyst layers (8) laminated on both sides of a polymer electrolyte membrane (9). The electrode catalyst layer (8) contains a catalyst (10), a carbon particle (11), and a polymer electrolyte (12). At least one void portion (14) is formed at an interface between the electrode catalyst layer (8) and the polymer electrolyte membrane (9). When a height being a length of the void portion (14) in a direction orthogonal to the interface is denoted as h, and a width being a length of the void portion (14) in a direction parallel to the interface is denoted as w, in a case that a section obtained by cutting the membrane electrode assembly for a solid polymer fuel cell by a plane orthogonal to the interface is observed by an SEM, the height h is less than or equal to 0.5 µm, and the total of a width w of the void portion (14) existing in an area with a length of 30 µm in a direction parallel to the interface is less than or equal to 10 µm, at each of the interfaces on both sides of the polymer electrolyte membrane (9) .

## Description

### Technical Field

The present invention relates to a membrane electrode assembly for a solid polymer fuel cell and a solid polymer fuel cell.

### Background Art

A solid polymer fuel cell having a structure in which a cathode catalyst layer and an anode catalyst layer clamp a polymer electrolyte membrane operates at an ordinary temperature and has a short start-up time, and therefore is expected to serve as a power source for an automobile, a stationary power source, and the like.

A manufacturing method of a membrane electrode assembly by coating a transfer substrate or a gas diffusion layer with catalyst ink containing carbon particles supporting catalysts, polymer electrolytes, and a solvent, and then thermocompression-bonding the coated substrate or layer to a polymer electrolyte membrane is known as a conventional manufacturing method of a membrane electrode assembly.

However, the conventional transfer-based manufacturing method of a membrane electrode assembly provides low adhesion between an electrode catalyst layer and a polymer electrolyte membrane, and tends to cause a void portion between the electrode catalyst layer and the polymer electrolyte membrane. Accordingly, there is a problem that a decline in power generation performance due to interfacial resistance, and a decline in power generation performance due to flooding caused by water clogging at a void portion tend to occur.

In order to resolve such a problem, various technologies are proposed. For example, PTL 1 discloses a technology of forming an unevenness on a surface of a polymer electrolyte membrane by injecting ceramic particles, and by forming an electrode catalyst layer on the unevenness, causing the unevenness to bite into a surface of the catalyst layer and improving adhesion. Further, PTL 2 discloses a technology of thermocompression-bonding an electrode catalyst layer to a polymer electrolyte membrane and improving adhesion, by irradiating an interface between the catalyst layer and the membrane with laser light and heating the interface.

However, in the technologies disclosed in PTLs 1 and 2, there is a risk of a decline in durability of a membrane electrode assembly, and also a risk of a decline in yield and increase in cost due to a complex manufacturing process.

### Citation list

### Patent Literature

PTL 1: Japanese Unexamined Patent Application Publication No. 2007-26836
PTL 2: Japanese Unexamined Patent Application Publication No. 2009-176518

### Summary of Invention

### Technical Problem

An object of the present invention is to provide a membrane electrode assembly for a solid polymer fuel cell and a solid polymer fuel cell that have excellent adhesion at an interface between an electrode catalyst layer and a polymer electrolyte membrane.

### Solution to Problem

A membrane electrode assembly for a solid polymer fuel cell according to an aspect of the present invention is summarized as a membrane electrode assembly for a solid polymer fuel cell including electrode catalyst layers laminated on both sides of a polymer electrolyte membrane, wherein the polymer electrolyte membrane contains a hydrocarbon-based polymer electrolyte, and no void portion exists at an interface between the polymer electrolyte membrane and the electrode catalyst layer.

A membrane electrode assembly for a solid polymer fuel cell according to another aspect of the present invention is summarized as a membrane electrode assembly for a solid polymer fuel cell including electrode catalyst layers laminated on both sides of a polymer electrolyte membrane, wherein the electrode catalyst layer contains a catalyst, a carbon particle, and a polymer electrolyte, the polymer electrolyte membrane contains a hydrocarbon-based polymer electrolyte, at least one void portion is formed at an interface between the electrode catalyst layer and the polymer electrolyte membrane, and, when a height being a length of the void portion in a direction orthogonal to the interface is denoted as h, and a width being a length of the void portion in a direction parallel to the interface is denoted as w, in a case that a section obtained by cutting the membrane electrode assembly for a solid polymer fuel cell by a plane orthogonal to the interface is observed by a scanning electron microscope, the height h of the void portion is less than or equal to 0.5 µm, and the total of a width w of the void portion existing in an area with a length of 30 µm in a direction parallel to the interface is less than or equal to 10 µm, at each of the interfaces on both sides of the polymer electrolyte membrane.

A membrane electrode assembly for a solid polymer fuel cell according to yet another aspect of the present invention is summarized as a membrane electrode assembly for a solid polymer fuel cell including electrode catalyst layers laminated on both sides of a polymer electrolyte membrane, wherein the electrode catalyst layer contains a catalyst, a carbon particle, a polymer electrolyte, and a fibrous material, and no void portion exists at an interface between the electrode catalyst layer and the polymer electrolyte membrane.

A membrane electrode assembly for a solid polymer fuel cell according to yet another aspect of the present invention is summarized as a membrane electrode assembly for a solid polymer fuel cell including electrode catalyst layers laminated on both sides of a polymer electrolyte membrane, wherein the electrode catalyst layer contains a catalyst, a carbon particle, a polymer electrolyte, and a fibrous material, at least one void portion is formed at an interface between the electrode catalyst layer and the polymer electrolyte membrane, and, when a height being a length of the void portion in a direction orthogonal to the interface is denoted as h, and a width being a length of the void portion in a direction parallel to the interface is denoted as w, in a case that a section obtained by cutting the membrane electrode assembly for a solid polymer fuel cell by a plane orthogonal to the interface is observed by a scanning electron microscope, the height h of the void portion is less than or equal to 0.5 µm, and the total of a width w of the void portion existing in an area with a length of 30 µm in a direction parallel to the interface is less than or equal to 10 µm, at each of the interfaces on both sides of the polymer electrolyte membrane.

A solid polymer fuel cell according to yet another aspect of the present invention is summarized to include the membrane electrode assembly for a solid polymer fuel cell according to any one of the aforementioned aspects.

### Advantageous Effects of Invention

The present invention can provide a membrane electrode assembly for a solid polymer fuel cell and a solid polymer fuel cell that have excellent adhesion at an interface between an electrode catalyst layer and a polymer electrolyte membrane.

### Brief Description of Drawings

FIG. 1 is an exploded perspective view illustrating an internal structure of a solid polymer fuel cell according to one embodiment of the present invention;
FIG. 2 is a diagram illustrating a structure of a membrane electrode assembly for a solid polymer fuel cell according to the one embodiment of the present invention;
FIG. 3 is a diagram illustrating a structure of a membrane electrode assembly for a solid polymer fuel cell according to another embodiment of the present invention;
FIG. 4 is a schematic cross-sectional view illustrating an example of a structure of an interface between an electrode catalyst layer and a polymer electrolyte membrane; and
FIG. 5 is a schematic cross-sectional view illustrating another example of a structure of an interface between an electrode catalyst layer and a polymer electrolyte membrane.

### Description of Embodiments

An embodiment of the present invention will be described below with reference to drawings. The present embodiment is not limited to an embodiment described below; and modifications such as a design change based on knowledge of a person skilled in the art may be made, and an embodiment with such modifications is also included in the scope of the present embodiment.

Further, specific details will be described in a detailed description below in order to provide a complete understanding of the embodiment of the present invention. However, it is obvious that one or more embodiments can be implemented without such specific details. Further, in order to simplify drawings, a known structure and a known device may be illustrated by simplified diagrams.

### (Structure of Solid Polymer Fuel Cell)

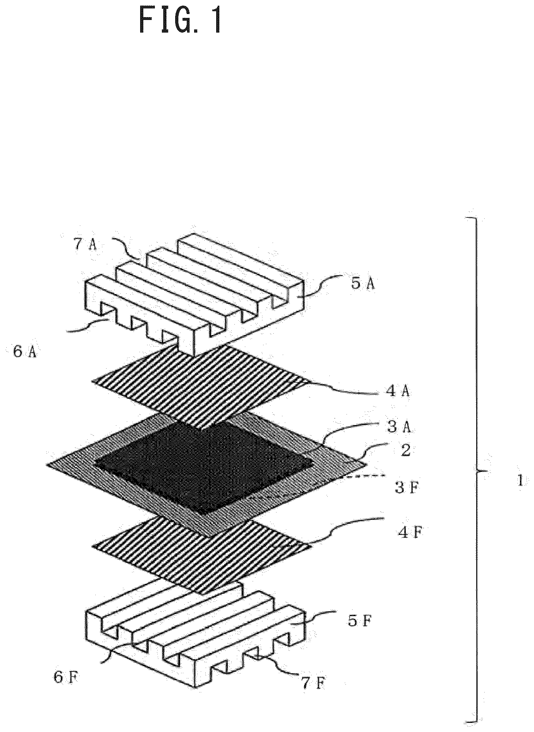

As illustrated in FIG. 1, a pair of electrode catalyst layers 3A and 3F facing one another are arranged at both sides of a polymer electrolyte membrane 2 constituting a solid polymer fuel cell 1 so that the polymer electrolyte membrane 2 is placed between the catalyst layers. A gas diffusion layer 4A is arranged on a surface of the electrode catalyst layer 3A opposite to a surface facing the polymer electrolyte membrane 2, and a gas diffusion layer 4F is arranged on a surface of the electrode catalyst layer 3F opposite to a surface facing the polymer electrolyte membrane 2, so that the catalyst layers face one another, and the polymer electrolyte membrane 2 and the pair of electrode catalyst layers 3A and 3F are placed between the gas diffusion layers.

A separator 5A is arranged on a surface of the gas diffusion layer 4A opposite to a surface facing the electrode catalyst layer 3A, the separator 5A including a gas passage 6A for circulation of of reactant gas on a principal plane facing the opposite surface and a cooling water passage 7A for circulation of cooling water on a principal plane opposite to the principal plane including the gas passage 6A. Furthermore, a separator 5F is arranged on a surface of the gas diffusion layer 4F opposite to a surface facing the electrode catalyst layer 3F, the separator 5F including a gas passage 6F for circulation of reactant gas on a principal plane facing the opposite surface and a cooling water passage 7F for circulation of cooling water on a principal plane opposite to the principal plane including the gas passage 6F. The electrode catalyst layers 3A and 3F may be hereinafter simply described as "electrode catalyst layers 3" when the catalyst layers do not need to be distinguished.

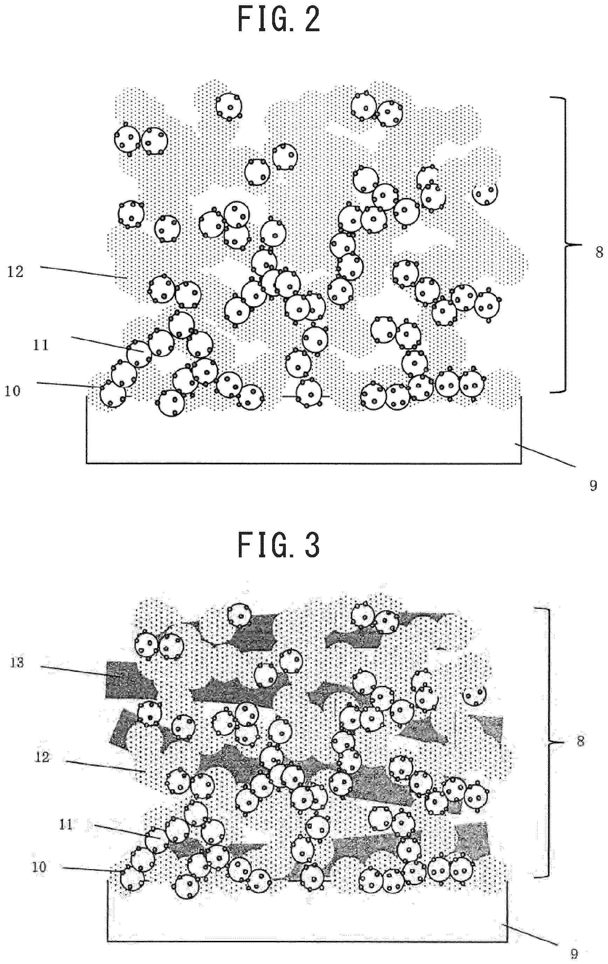

FIG. 2 is a schematic cross-sectional view illustrating a configuration example of an electrode catalyst layer according to the present embodiment. As illustrated in FIG. 2, an electrode catalyst layer 8 according to the present embodiment is bonded to a surface of a polymer electrolyte membrane 9 and includes catalysts 10, carbon particles 11 as electroconductive carriers, and polymer electrolytes 12. Then, a part in the electrode catalyst layer 8 where none of the components being a catalyst 10, a carbon particle 11, and a polymer electrolyte 12 exist forms a pore.

Further, the polymer electrolyte membrane 9 according to the present embodiment may be a hydrocarbon-based polymer electrolyte membrane containing hydrocarbon-based polymer electrolytes or may be a hydrocarbon-based polymer electrolyte membrane consisting of only hydrocarbon-based polymer electrolytes. A "hydrocarbon-based polymer electrolyte membrane" according to the present embodiment refers to a membrane containing, for example, more than 50 mass% of hydrocarbon-based polymer electrolytes, to be described later, in an entire mass of the polymer electrolyte membrane 9.

### (Manufacture of Catalyst Ink)

Next, a manufacturing method of catalyst ink for forming the electrode catalyst layers 3 and 8 (electrode catalyst layers for a solid polymer fuel cell) in the solid polymer fuel cell 1 according to the present embodiment will be described. First, carbon particles 11 supporting catalysts 10 are mixed and dispersed in a dispersion medium, and a catalyst particle slurry is obtained.

For example, an element of the platinum group (platinum, palladium, ruthenium, iridium, rhodium, and osmium), a metal such as iron, lead, copper, chromium, cobalt, nickel, manganese, vanadium, molybdenum, gallium, or aluminum, or an alloy, an oxide, a double oxide, or a carbide of the metals may be used as the catalyst 10.

While any carbon particle 11 having electroconductivity and being capable of supporting catalysts 10 without being affected by the catalysts 10 can be used, carbon-based particles are generally used. For example, carbon black, graphite, black lead, activated carbon, a carbon nanotube, a carbon nanofiber, or a fullerene may be used as a carbon-based particle. An excessively small particle diameter of a carbon-based particle causes difficulty in forming an electron conduction path, and an excessively large particle diameter reduces gas diffusibility of the electrode catalyst layer 8 and reduces a utilization factor of catalysts; and therefore the particle diameter is preferably within a range of greater than or equal to 10 nm and less than or equal to 1000 nm. The particle diameter is more preferably within a range of greater than or equal to 10 nm and less than or equal to 100 nm.

For example, any one type out of water and alcohols such as methanol, ethanol, 1-propanol, 2-propanol, 1-butanol, 2-butanol, isobutyl alcohol, tert-butyl alcohol, and pentanol may be selected and used as a dispersion medium. Further, a solvent being a mixture of two or more types of the aforementioned solvents may be used. For example, a device such as a bead mill, a planetary mixer, or a dissolver may be used for mixing and dispersing.

Next polymer electrolytes 12 are added to the catalyst particle slurry manufactured by the method described above. For example, a fluorinated polymer electrolyte or a hydrocarbon-based polymer electrolyte may be used as the polymer electrolyte 12. For example, Nafion (registered trademark) from E. I. du Pont de Nemours and Co., Flemion (registered trademark) from AGC Inc., Aciplex (registered trademark) from Asashi Kasei Corp., or Gore Select (registered trademark) from W. L. Gore & Associates, Inc. may be used as a fluorinated polymer electrolyte. For example, an electrolyte such as sulfonated polyetherketone, sulfonated polyethersulfone, sulfonated polyetherethersulfone, sulfonated polysulfide, or sulfonated polyphenylene may be used as a hydrocarbon-based polymer electrolyte. Among the above, a material based on Nafion (registered trademark) from E. I. du Pont de Nemours and Co. is preferably used as a polymer electrolyte.

### (Manufacture of Membrane Electrode Assembly)

A membrane electrode assembly is manufactured by bonding the electrode catalyst layers 3 to both sides of the polymer electrolyte membrane 2. At this time, for example, methods of bonding the electrode catalyst layer 3 to the polymer electrolyte membrane 2 include a method of bonding the polymer electrolyte membrane 2 to the electrode catalyst layer 3 by using, as a transfer substrate, a transfer substrate with an electrode catalyst layer, the transfer substrate being coated with catalyst ink, bringing a surface of the electrode catalyst layer on the transfer substrate with an electrode catalyst layer into contact with the polymer electrolyte membrane, and applying heat and pressure. When bonding is performed by bringing the polymer electrolyte membrane 2 into contact with the electrode catalyst layer 3 and applying heat and pressure, by use of a transfer substrate with an electrode catalyst layer, the pressure on or the temperature at the electrode catalyst layer 3 may affect power generation performance of the membrane electrode assembly. It is desirable that pressure applied to the laminated body be within a range of greater than or equal to 0.1 MPa and less than or equal to 20 MPa in order to obtain a membrane electrode assembly with high power generation performance. When the pressure applied to the laminated body is greater than 20 MPa, the electrode catalyst layer 3 is excessively compressed, and when the pressure is less than 0.1 MPa, a bonding property between the electrode catalyst layer 3 and the polymer electrolyte membrane 2 may decline and consequently, power generation performance may decline. Further, taking improvement of an bonding property of an interface between the polymer electrolyte membrane 2 and the electrode catalyst layer 3, and suppression of interfacial resistance into consideration, it is preferable that a temperature at the bonding be near a glass transition point of the polymer electrolyte membrane 2 or the polymer electrolyte 12 in the electrode catalyst layer 3.

However, the method described above provides poor adhesion between the electrode catalyst layer 3 and the polymer electrolyte membrane 2, and therefore a void portion is likely to be formed at the interface between the electrode catalyst layer 3 and the polymer electrolyte membrane 2. Consequently, problems such as a decline in power generation performance due to interfacial resistance and a decline in power generation performance due to flooding caused by water clogging at the void portion tend to occur.

On the other hand, a membrane electrode assembly may also be manufactured by a method of directly coating a surface of the polymer electrolyte membrane 2 with catalyst ink and subsequently removing a solvent component (dispersion medium) from the catalyst ink coating. For example, various coating methods such as die coating, roll coating, curtain coating, spray coating, or squeegeeing may be used as a method of directly coating the polymer electrolyte membrane 2 with catalyst ink. Die coating is particularly preferable. Die coating has a stable coating thickness in an intermediate part of the coating and may support intermittent coating. Furthermore, for example, a warm air oven, a far-infrared (IR) drying, a hot plate, or vacuum drying may be used as a method of drying coated catalyst ink. A drying temperature is within a range of greater than or equal to 40°C and less than or equal to 200°C, and preferably within a range of greater than or equal to 40°C and less than or equal to 120°C. A drying time is in a range of greater than or equal to 0.5 minutes and less than or equal to 1 hour, and preferably in a range of greater than or equal to 1 minute and less than or equal to 30 minutes.

The method provides excellent adhesion between the electrode catalyst layer 3 and the polymer electrolyte membrane 2, and the problem described above is not likely to occur. However, there is a problem with the method of directly coating the polymer electrolyte membrane 2 with catalyst ink that swelling of the polymer electrolyte membrane 2 is likely to cause wrinkles and cracks on the coated electrode catalyst layer 3, and consequently, a decline in power generation performance and a decline in durability tend to occur. Since a fluorinated polymer electrolyte membrane in particular has a low glass transition point and is likely to cause swelling, wrinkles and cracks tend to occur at the electrode catalyst layer 3 in a process of directly coating the polymer electrolyte membrane 2 with catalyst ink and drying the catalyst ink.

On the other hand, a hydrocarbon-based polymer electrolyte has a high glass transition point and is not likely to cause swelling in a process of directly coating the polymer electrolyte membrane 2 with catalyst ink and drying the catalyst ink; and therefore by using a hydrocarbon-based polymer electrolyte membrane being a membrane containing a hydrocarbon-based polymer electrolyte as the polymer electrolyte membrane 2, as is the case with the present embodiment, a membrane electrode assembly being unlikely to cause wrinkles and cracks at the electrode catalyst layer 3 even when the polymer electrolyte membrane 2 is directly coated with catalyst ink and having excellent adhesion between the electrode catalyst layer 3 and the polymer electrolyte membrane 2 can be obtained. For example, an electrolyte such as sulfonated polyetherketone, sulfonated polyethersulfone, sulfonated polyetherethersulfone, sulfonated polysulfide, or sulfonated polyphenylene may be used as a hydrocarbon-based polymer electrolyte contained in the hydrocarbon-based polymer electrolyte membrane.

The aforementioned effect provided when a hydrocarbon-based polymer electrolyte membrane is used as the polymer electrolyte membrane 2 will be described in detail below.

While ink containing a catalyst and alcohol is at times used as catalyst ink used in manufacture of an electrode catalyst layer, the catalyst ink has a risk that the ink itself may ignite (burn) . Accordingly, when the catalyst ink is used, water may be added to the catalyst ink to reduce ignitability (flammability) of the ink itself.

Adding water to the catalyst ink reduces ignitability (flammability) of the ink itself but provides a harmful effect that a drying rate of the catalyst ink declines. Accordingly, there is a need for raising a drying temperature of the catalyst ink from an ordinary temperature of 80°C to, for example, around 90°C when an electrode catalyst layer is manufactured by use of the catalyst ink added with water.

Many of fluorinated polymer electrolyte membranes used as a polymer electrolyte membrane have a low glass transition point. Accordingly, when a fluorinated polymer electrolyte membrane is used as a polymer electrolyte membrane, a drying temperature of catalyst ink may exceed a glass transition point of the fluorinated polymer electrolyte membrane. In this case, the fluorinated polymer electrolyte membrane swells, and adhesion between an electrode catalyst layer and the fluorinated polymer electrolyte membrane tends to decline.

On the other hand, many of hydrocarbon-based polymer electrolyte membranes used in the present embodiment have a high glass transition point compared with fluorinated polymer electrolyte membranes. For example, a glass transition point of a hydrocarbon-based polymer electrolyte membrane is 100°C or higher. Accordingly, in a case that a hydrocarbon-based polymer electrolyte membrane is used as a polymer electrolyte membrane, even when a drying temperature of catalyst ink is raised to, for example, 90°C, the drying temperature is not likely to exceed a glass transition point of the hydrocarbon-based polymer electrolyte membrane. Consequently, swelling of the hydrocarbon-based polymer electrolyte membrane is extremely reduced, and adhesion between an electrode catalyst layer and the hydrocarbon-based polymer electrolyte membrane tend to be improved compared with adhesion between the electrode catalyst layer and a fluorinated polymer electrolyte membrane.

On the other hand, methods of directly coating the polymer electrolyte membrane 2 with catalyst ink without causing wrinkles and cracks at a fluorinated polymer electrolyte membrane includes a method of adding fibrous materials 13 in catalyst ink. Adding fibrous materials 13 in catalyst ink enhances a strength of the electrode catalyst layer 3, and therefore a membrane electrode assembly in which wrinkles and cracks are less likely to occur at the electrode catalyst layer 3 even when the polymer electrolyte membrane 2 is directly coated with catalyst ink, and adhesion between the electrode catalyst layer 3 and the polymer electrolyte membrane 2 is excellent can be obtained. A polymer electrolyte having a tetrafluoroethylene skeleton, such as "Nafion (registered trademark) " from E. I. du Pont de Nemours and Co. can be used as a fluorinated polymer electrolyte.

FIG. 3 illustrates a configuration example of a membrane electrode assembly for a solid polymer fuel cell including an electrode catalyst layer 3 formed by adding fibrous materials 13 in catalyst ink.

An electron conductive fiber and a proton conductive fiber can be used as the fibrous materials 13. While only one type of fiber described below may be singly used as the fibrous material 13, two or more types may be used in combination, and an electron conductive fiber and a proton conductive fiber may be used in combination.

For example, a carbon fiber, a carbon nanotube, a carbon nanohorn, and an electroconductive polymer nanofiber may be exemplified as an electron conductive fiber according to the present embodiment. A carbon nanofiber is particularly preferable in terms of electroconductivity and dispersiveness. Further, use of an electron conductive fiber with a catalytic ability allows reduction of an amount of usage of a catalyst formed of a noble metal and therefore is more preferable. For example, a carbon alloy catalyst manufactured from a carbon nanofiber may be exemplified for use as an air electrode of a solid polymer fuel cell. Further, a fibrously processed electrode active material for an oxygen reduction electrode may be used, and for example, a material containing at least one of transition-metal elements selected from Ta, Nb, Ti, and Zr may be used. Partial oxides of carbonitrides of the transition-metal elements, or electroconductive oxides and electroconductive oxynitrides of the transition-metal elements may be exemplified.

A proton conductive fiber according to the present embodiment has only to be a fibrously processed polymer electrolyte with proton conductivity, and for example, a fluorinated polymer electrolyte or a hydrocarbon-based polymer electrolyte may be used. For example, Nafion (registered trademark) from E. I. du Pont de Nemours and Co., Flemion (registered trademark) from AGC Inc., Aciplex (registered trademark) from Asashi Kasei Corp., or Gore Select (registered trademark) from W. L. Gore & Associates, Inc. may be used as a fluorinated polymer electrolyte. For example, an electrolyte such as sulfonated polyetherketone, sulfonated polyethersulfone, sulfonated polyetherethersulfone, sulfonated polysulfide, or sulfonated polyphenylene may be used as a hydrocarbon-based polymer electrolyte. Among the above, a material based on Nafion (registered trademark) from E. I. du Pont de Nemours and Co. is preferably used as a polymer electrolyte.

A fiber diameter of the fibrous material 13 is preferably within a range of greater than or equal to 0.5 nm and less than or equal to 500 nm, and more preferably within a range of greater than or equal to 5 nm and less than or equal to 200 nm. Setting the fiber diameter to the range allows increase in pores in the electrode catalyst layer 3 and higher output.

Further, a fiber length of the fibrous material 13 is preferably within a range of greater than or equal to 1 µm and less than or equal to 40 µm, and more preferably within a range of greater than or equal to 1 µm and less than or equal to 20 µm. Setting the fiber length to the range allows enhancement of a strength of the electrode catalyst layer 3 and suppression of wrinkles and cracks on formation. Further, the setting allows increase of pores in the electrode catalyst layer 3 and higher output.

While a case of forming a membrane electrode assembly for a solid polymer fuel cell by coating a fluorinated polymer electrolyte membrane with catalyst ink added with fibrous materials 13 has been described in the embodiment described above, the present invention is not limited to the above. For example, a membrane electrode assembly for a solid polymer fuel cell may be formed by coating a hydrocarbon-based polymer electrolyte membrane with catalyst ink added with fibrous materials 13.

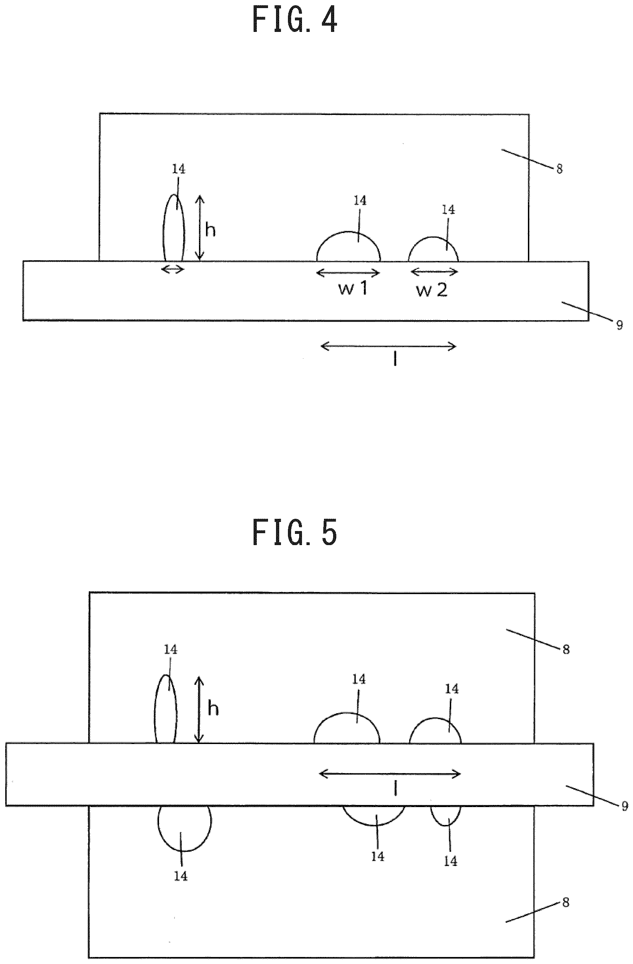

A void portion 14 according to the present embodiment will be described in detail by use of FIG. 4. While it is more preferable that no void portion 14 exist at an interface between the electrode catalyst layer 8 and the polymer electrolyte membrane 9, there may be a case that a void portion 14 occurs. The aforementioned state that "no void portion 14 exists" refers to a state that even when an interface between the electrode catalyst layer 8 and the polymer electrolyte membrane 9 is observed with magnifying power of a scanning electron microscope (SEM) set to 4000-fold, existence of a void portion 14 cannot be confirmed at the interface.

Occurrence of microscopic unevenness on a surface of the electrode catalyst layer 8 when the electrode catalyst layer 8 is formed on a transfer substrate (unillustrated) may be cited as a cause of occurrence of a void portion 14. Consequently, a void portion 14 due to unevenness occurs at the interface between the polymer electrolyte membrane 9 and the electrode catalyst layer 8 when the electrode catalyst layer 8 is transferred to the polymer electrolyte membrane 9.

Further, even in a case that a method of directly coating the polymer electrolyte membrane 9 with catalyst ink without going through a transfer substrate is used, when wrinkles and cracks occur at the electrode catalyst layer 8 formed by coating, a corresponding void portion 14 occurs at the interface between the polymer electrolyte membrane 9 and the electrode catalyst layer 8.

A problem such as a decline in power generation performance or a decline in durability tends to occur particularly when a void portion 14 with a height h exceeding 0.5 µm exists at an interface between the electrode catalyst layer 8 and the polymer electrolyte membrane 9, the height being a length in a direction orthogonal to the interface, or when many void portions 14 with heights h less than or equal to 0.5 µm exist in a certain area.

However, water is generated by power generation in a fuel cell, and the polymer electrolyte membrane 9 swells by the generated water soaking into the polymer electrolyte membrane 9 when the fuel cell is used. It was found that even when void portions 14 exist between the electrode catalyst layer 8 and the polymer electrolyte membrane 9, the void portions 14 are consequently filled by swelling of the polymer electrolyte membrane 9 as long as a height h of each void portion 14 is less than or equal to 0.5 µm, and also the total of widths w of void portions 14 existing in an area with a length 1 in a direction parallel to an interface being 30 µm is less than or equal to 10 µm.

In the example illustrated in FIG. 4, two void portions 14 and 14 exist in an area with a length 1 in a direction parallel to an interface being 30 µm, and the total of widths w1 and w2 of both void portions 14 and 14 is less than or equal to 10 µm.

According to the present embodiment, a length of a void portion 14 in a direction orthogonal to an interface is denoted as a height h, and a length of the void portion 14 in a direction parallel to the interface is denoted as a width w when a section obtained by cutting a membrane electrode assembly for a solid polymer fuel cell by a plane orthogonal to the interface is observed by an SEM.

Accordingly, by void portions 14 occurring at an interface between the polymer electrolyte membrane 9 and the electrode catalyst layer 8 satisfying the two numerical conditions described above, a decline in power generation performance due to interfacial resistance between the electrode catalyst layer 8 and the polymer electrolyte membrane 9, and a decline in power generation performance due to flooding caused by water clogging at a void portion 14 become less likely to occur. A height h of a void portion 14 needs to be less than or equal to 0.5 µm and is more preferably less than or equal to 0.3 µm. The reason is that when a height h of a void portion 14 is less than or equal to 0.3 µm, the void portion 14 is likely to be filled even when a swelling rate of the polymer electrolyte membrane 9 is low.

Further, when the total of widths w of void portions 14 existing in an area with a length 1 in a direction parallel to an interface being 30 µm exceeds 10 µm, a width of a void portion 14 increases, and therefore the void portion 14 becomes less likely to be filled even when the polymer electrolyte membrane 9 swells.

A void portion 14 may be confirmed by observing, by use of an SEM, a section obtained by cutting a membrane electrode assembly for a solid polymer fuel cell by a plane orthogonal to an interface. While an SEM type is not particularly limited, for example, S-4800 from Hitachi High-Technologies Corp. may be used. Further, while magnifying power at observation by an SEM is not particularly limited, for example, 4000-fold may be used.

While the aforementioned effect is provided as long as a height h and a width w of a void portion 14 existing at an interface between one surface of the polymer electrolyte membrane 9 and the electrode catalyst layer 8 are within the ranges described above, it is more preferable that a height h and a width w of a void portion 14 existing at an interface between the polymer electrolyte membrane 9 and the electrode catalyst layer 8 be within the ranges described above on both sides of the polymer electrolyte membrane 9.

Furthermore, it is further preferable that void portions 14 existing at interfaces on both sides of the polymer electrolyte membrane 9 in the same position or positions partially overlapping one another in a direction parallel to the interfaces with the polymer electrolyte membrane 9 placed in-between, as illustrated in FIG. 5, satisfy the ranges described above at the same time. In other words, by the two numerical conditions described above being satisfied at the same time by void portions 14 existing at interfaces on both sides of the polymer electrolyte membrane 9 in an area with a length of 30 µm in a direction parallel to the interfaces, reaction efficiency on the anode side and the cathode side can be further enhanced.

It is preferable that a thickness of the electrode catalyst layer 8 be greater than or equal to 5 µm and less than or equal to 30 µm, and, it is particularly preferable that the thickness be less than or equal to 20 µm. When the thickness of the electrode catalyst layer 8 is greater than 30 µm, more accurately greater than 20 µm, cracks are likely to occur at the electrode catalyst layer 8, and furthermore, when the electrode catalyst layer 8 is used for a fuel cell, there is a risk that diffusibility and electroconductivity of gas and generated water may decline, and output may decline . When the thickness of the electrode catalyst layer 8 is less than 5 µm, variations in the thickness tend to arise, and internal catalysts and polymer electrolytes may become uneven.

Further, for example, a combination ratio of polymer electrolytes 12 in the electrode catalyst layer 8 is preferably at the same level to around half of a weight of carbon particles 11. Further, a combination ratio of fibrous materials 13 is preferably at the same level to around half of the weight of the carbon particles 11. A higher solid content ratio of catalyst ink is preferable within a range allowing coating of a membrane.

### (Effect of Present Embodiment)

The present embodiment enables manufacture of a membrane electrode assembly with excellent adhesion between the electrode catalyst layer 8 and the polymer electrolyte membrane 9, and also excellent power generation performance and durability, without using a complex process.

Examples and Comparative Examples of the present invention will be described below.

### (Example 1)

Catalyst ink was manufactured by mixing a platinum-supported carbon catalyst (TEC10E50E from Tanaka Kikinzoku Kogyo K.K.), water, 1-propanol, and a polymer electrolyte (Nafion [registered trademark] dispersion solution from Wako Pure Chemical Corp.), and dispersing the respective components by use of a bead mill disperser, without excessively dispersing the components. A solid content ratio of thus manufactured catalyst ink was 10 mass%. A mass ratio between water and 1-propanol was set to 1:1. Further, conditions for dispersing the respective components by use of the bead mill disperser were set as follows. Further, the conditions below were common throughout the following Examples and Comparative Examples.
- Number of passes: 5 times
- Ball (bead) size: diameter 0.3 mm
- Agitator peripheral speed: 10 m/sec

Further, a hydrocarbon-based polymer electrolyte membrane was manufactured by sulfonating super-engineering plastics by a known technique.

A membrane electrode assembly was obtained by directly coating both surfaces of the hydrocarbon-based polymer electrolyte membrane with the manufactured catalyst ink by use of a slit die coater, drying the ink, and forming electrode catalyst layers.

The thus obtained membrane electrode assembly was first sectioned by use of a microtome (EM UC7 Ultramicrotome from Leica Microsystems). Next, an interface between the electrode catalyst layer and the polymer electrolyte membrane in the sectioned membrane electrode assembly was observed by use of an SEM (S-4800 from Hitachi High-Technologies Corp.) with magnifying power set to 4000-fold.

No void portion existed at the interface between the electrode catalyst layer and the polymer electrolyte membrane in the membrane electrode assembly in Example 1. Consequently, excellent adhesion between the electrode catalyst layer and the polymer electrolyte membrane was exhibited, and also excellent power generation performance and durability were exhibited.

### (Example 2)

A membrane electrode assembly in Example 2 was obtained similarly to Example 1 except that an amount of coating of an electrode catalyst layer (catalyst ink) on the cathode side was doubled.

No void portion existed at an interface between the electrode catalyst layer and a polymer electrolyte membrane in the membrane electrode assembly in Example 2. Consequently, excellent adhesion between the electrode catalyst layer and the polymer electrolyte membrane was exhibited, and also excellent power generation performance and durability were exhibited.

### (Example 3)

A membrane electrode assembly in Example 3 was obtained by a procedure similar to that in Example 1 except that a planetary ball mill disperser was used for dispersion of catalyst ink. Conditions for using a ball mill disperser for dispersing the respective components were set as follows. Further, the conditions below were common throughout the following Examples and Comparative Examples.
- Dispersion time: 3 hours
- Ball size: diameter 3 mm

The catalyst ink in Example 3 exhibited a lower degree of dispersion compared with the catalyst ink in Example 1 undergoing dispersion by a bead mill disperser. Consequently, a plurality of void portions with heights h ranging from 0.3 µm to 0.4 µm existed at an interface between an electrode catalyst layer and a polymer electrolyte membrane in the membrane electrode assembly in Example 3, and the total of widths w of a plurality of void portions existing in an area with a length of 30 µm in a direction parallel to the interface was 6 µm. Power generation performance and durability of the membrane electrode assembly in Example 3 were excellent.

### (Example 4)

A membrane electrode assembly in Example 4 was obtained by a procedure similar to that in Example 1 except that a carbon catalyst based on an alloy of platinum and cobalt was used in place of a platinum-supported carbon catalyst.

The catalyst ink in Example 4 caused cracks at part of an electrode catalyst layer when a polymer electrolyte membrane was coated, compared with the ink in Example 1. Consequently, a plurality of void portions with heights h ranging from 0.1 µm to 0.2 µm existed at an interface between the electrode catalyst layer and the polymer electrolyte membrane in the membrane electrode assembly in Example 4, and the total of widths w of a plurality of void portions existing in an area with a length of 30 µm in a direction parallel to the interface was 10 µm. Power generation performance and durability of the membrane electrode assembly in Example 4 were excellent.

### (Example 5)

A membrane electrode assembly in Example 5 was obtained by a procedure similar to that in Example 1 except that a carbon nanofiber (VGCF-H [registered trademark] from Showa Denko K.K.) was mixed into the catalyst ink in Example 1.

No void portion existed at an interface between an electrode catalyst layer and a polymer electrolyte membrane in the membrane electrode assembly in Example 5, and consequently, excellent adhesion between the electrode catalyst layer and the polymer electrolyte membrane was exhibited, and also excellent power generation performance and durability were exhibited.

### (Example 6)

A membrane electrode assembly in Example 6 was obtained by a procedure similar to that in Example 3 except that a carbon nanofiber (VGCF-H [registered trademark] from Showa Denko K.K.) was mixed into the catalyst ink in Example 3.

The catalyst ink in Example 6 exhibited a lower degree of dispersion compared with the catalyst ink in Example 3. Consequently, a plurality of void portions with heights h ranging from 0.4 µm to 0.5 µm existed at an interface between an electrode catalyst layer and a polymer electrolyte membrane in the membrane electrode assembly in Example 6, and the total of widths w of a plurality of void portions existing in an area with a length of 30 µm in a direction parallel to the interface was 9 µm. Power generation performance and durability of the membrane electrode assembly in Example 6 were excellent.

### (Example 7)

Catalyst ink was manufactured by mixing a platinum-supported carbon catalyst (TEC10E50E from Tanaka Kikinzoku Kogyo K.K.), water, 1-propanol, a polymer electrolyte (Nafion [registered trademark] dispersion solution from Wako Pure Chemical Corp.), and a carbon nanofiber (VGCF-H [registered trademark] from Showa Denko K.K.), and using a bead mill disperser.

A membrane electrode assembly was obtained by directly coating both surfaces of a polymer electrolyte membrane (Nafion 211 [registered trademark] from E. I. du Pont de Nemours and Co.) with the manufactured catalyst ink by use of a slit die coater, drying the ink, and forming electrode catalyst layers.

No void portion existed at an interface between the electrode catalyst layer and the polymer electrolyte membrane in the membrane electrode assembly in Example 7. Consequently, excellent adhesion between the electrode catalyst layer and the polymer electrolyte membrane was exhibited, and also excellent power generation performance and durability were exhibited.

### (Example 8)

A membrane electrode assembly in Example 8 was obtained similarly to Example 7 except that an amount of coating of an electrode catalyst layer (catalyst ink) on the cathode side was doubled.

No void portion existed at an interface between the electrode catalyst layer and a polymer electrolyte membrane in the membrane electrode assembly in Example 8. Consequently, excellent adhesion between the electrode catalyst layer and the polymer electrolyte membrane was exhibited, and also excellent power generation performance and durability were exhibited.

### (Example 9)

A membrane electrode assembly in Example 9 was obtained by a procedure similar to that in Example 7 except that a ball mill disperser was used for dispersion of catalyst ink.

The catalyst ink in Example 9 exhibited a low degree of dispersion compared with the catalyst ink in Example 7 undergoing dispersion by a bead mill disperser. Consequently, a plurality of void portions with heights h ranging from 0.3 µm to 0.4 µm existed at an interface between an electrode catalyst layer and a polymer electrolyte membrane in the membrane electrode assembly in Example 9, and the total of widths w of a plurality of void portions existing in an area with a length of 30 µm in a direction parallel to the interface was 6 µm. Power generation performance and durability of the membrane electrode assembly in Example 9 were excellent.

### (Example 10)

A membrane electrode assembly in Example 10 was obtained by a procedure similar to that in Example 7 except that a carbon catalyst based on an alloy of platinum and cobalt was used in place of a platinum-supported carbon catalyst.

The catalyst ink in Example 10 caused cracks at part of an electrode catalyst layer when a polymer electrolyte membrane was coated, compared with the ink in Example 7. Consequently, a plurality of void portions with heights h ranging from 0.1 µm to 0.2 µm existed at an interface between the electrode catalyst layer and the polymer electrolyte membrane in the membrane electrode assembly in Example 10, and the total of widths w of a plurality of void portions existing in an area with a length of 30 µm in a direction parallel to the interface was 10 µm. Power generation performance and durability of the membrane electrode assembly in Example 10 were excellent.

### (Example 11)

A membrane electrode assembly in Example 11 was obtained by a procedure similar to that in Example 7 except that a carbon nanotube (NC7000 [registered trademark] from Nanocyl SA) was used as a fibrous material in place of a carbon nanofiber.

No void portion existed at an interface between an electrode catalyst layer and a polymer electrolyte membrane in the membrane electrode assembly in Example 11, and consequently, excellent adhesion between the electrode catalyst layer and the polymer electrolyte membrane was exhibited, and also excellent power generation performance and durability were exhibited.

### (Comparative Example 1)

A membrane electrode assembly in Comparative Example 1 was obtained similarly to Example 1 except that Nafion 211 (registered trademark), a polymer electrolyte membrane from E. I. du Pont de Nemours and Co., was used as a polymer electrolyte membrane.

Wrinkles and cracks occurred at an electrode catalyst layer in the membrane electrode assembly in Comparative Example 1, resulting in a decline in power generation performance and durability. At this time, a plurality of void portions with heights h ranging from 0.1 µm to 0. 3 µm existed at an interface between the electrode catalyst layer and the polymer electrolyte membrane, and the total of widths w of a plurality of void portions existing in an area with a length of 30 µm in a direction parallel to the interface was 16 µm.

### (Comparative Example 2)

A membrane electrode assembly in Comparative Example 2 was obtained similarly to Example 1 except that the membrane electrode assembly was manufactured by a method of coating a transfer substrate with catalyst ink and then transferring the ink to a polymer electrolyte membrane.

A void portion with a height h exceeding 0.5 µm occurred at an interface between an electrode catalyst layer and the polymer electrolyte membrane in the membrane electrode assembly in Comparative Example 2, resulting in a decline in power generation performance and durability.

### (Comparative Example 3)

A membrane electrode assembly in Comparative Example 3 was obtained similarly to Example 1 except that an amount of coating of an electrode catalyst layer (catalyst ink) on the cathode side was quadrupled.

Wrinkles and cracks occurred at the electrode catalyst layer in the membrane electrode assembly in Comparative Example 3, resulting in a decline in power generation performance and durability. At this time, a plurality of void portions with heights h ranging from 0.1 µm to 0.3 µm existed at an interface between the electrode catalyst layer and a polymer electrolyte membrane, and the total of widths w of a plurality of void portions existing in an area with a length of 30 µm in a direction parallel to the interface was 13 µm.

### (Comparative Example 4)

A membrane electrode assembly in Comparative Example 4 was obtained similarly to Example 7 except that the membrane electrode assembly was manufactured by a method of coating a transfer substrate with catalyst ink and then transferring the ink to a polymer electrolyte membrane.

A void portion with a height h exceeding 0.5 µm occurred at an interface between an electrode catalyst layer and the polymer electrolyte membrane in the membrane electrode assembly in Comparative Example 4, resulting in a decline in power generation performance and durability.

### (Comparative Example 5)

A membrane electrode assembly in Comparative Example 5 was obtained similarly to Example 7 except that an amount of coating of an electrode catalyst layer (catalyst ink) on the cathode side was quadrupled.

Wrinkles and cracks occurred at the electrode catalyst layer in the membrane electrode assembly in Comparative Example 5, resulting in a decline in power generation performance and durability. At this time, a plurality of void portions with heights h ranging from 0.1 µm to 0.3 µm existed at an interface between the electrode catalyst layer and a polymer electrolyte membrane, and the total of widths w of a plurality of void portions existing in an area with a length of 30 µm in a direction parallel to the interface was 14 µm.

### Reference Signs List

- 1: Solid polymer fuel cell
- 2: Polymer electrolyte membrane
- 3A, 3F: Electrode catalyst layer
- 4A, 4F: Gas diffusion layer
- 5A, 5F: Separator
- 6A, 6F: Gas passage
- 7A, 7F: Cooling water passage
- 8: Electrode catalyst layer
- 9: Polymer electrolyte membrane
- 10: Catalyst
- 11: Carbon particle
- 12: Polymer electrolyte
- 13: Fibrous material
- 14: Void portion

## Claims

1. A membrane electrode assembly for a solid polymer fuel cell comprising electrode catalyst layers laminated on both sides of a polymer electrolyte membrane, wherein
the polymer electrolyte membrane contains a hydrocarbon-based polymer electrolyte, and
no void portion exists at an interface between the polymer electrolyte membrane and the electrode catalyst layer.

2. A membrane electrode assembly for a solid polymer fuel cell comprising electrode catalyst layers laminated on both sides of a polymer electrolyte membrane, wherein
the electrode catalyst layer contains a catalyst, a carbon particle, and a polymer electrolyte,
the polymer electrolyte membrane contains a hydrocarbon-based polymer electrolyte,
at least one void portion is formed at an interface between the electrode catalyst layer and the polymer electrolyte membrane, and,
when a height being a length of the void portion in a direction orthogonal to the interface is denoted as h, and a width being a length of the void portion in a direction parallel to the interface is denoted as w, in a case that a section obtained by cutting the membrane electrode assembly for a solid polymer fuel cell by a plane orthogonal to the interface is observed by a scanning electron microscope,
the height h of the void portion is less than or equal to 0.5 µm, and a total of a width w of the void portion existing in an area with a length of 30 µm in a direction parallel to the interface is less than or equal to 10 µm, at each of the interfaces on both sides of the polymer electrolyte membrane.

3. A membrane electrode assembly for a solid polymer fuel cell comprising electrode catalyst layers laminated on both sides of a polymer electrolyte membrane, wherein
the electrode catalyst layer contains a catalyst, a carbon particle, a polymer electrolyte, and a fibrous material, and
no void portion exists at an interface between the electrode catalyst layer and the polymer electrolyte membrane.

4. A membrane electrode assembly for a solid polymer fuel cell comprising electrode catalyst layers laminated on both sides of a polymer electrolyte membrane, wherein
the electrode catalyst layer contains a catalyst, a carbon particle, a polymer electrolyte, and a fibrous material,
at least one void portion is formed at an interface between the electrode catalyst layer and the polymer electrolyte membrane, and,
when a height being a length of the void portion in a direction orthogonal to the interface is denoted as h, and a width being a length of the void portion in a direction parallel to the interface is denoted as w, in a case that a section obtained by cutting the membrane electrode assembly for a solid polymer fuel cell by a plane orthogonal to the interface is observed by a scanning electron microscope,
the height h of the void portion is less than or equal to 0.5 µm, and a total of a width w of the void portion existing in an area with a length of 30 µm in a direction parallel to the interface is less than or equal to 10 µm, at each of the interfaces on both sides of the polymer electrolyte membrane.

5. The membrane electrode assembly for a solid polymer fuel cell according to claim 3 or 4, wherein
the fibrous material contains one type or two or more types selected from a carbon nanofiber, a carbon nanotube, an electrolyte fiber, and an oxynitride fiber.

6. The membrane electrode assembly for a solid polymer fuel cell according to claim 2 or 4, wherein
the height h is less than or equal to 0.3 µm.

7. The membrane electrode assembly for a solid polymer fuel cell according to any one of claims 1 to 6, wherein
a thickness of the electrode catalyst layer is less than or equal to 20 µm.

8. A solid polymer fuel cell comprising the membrane electrode assembly for a solid polymer fuel cell according to any one of claims 1 to 7.
